Europäisches Patentamt

(19) European Patent Office

Office européen des brevets

(11) Numéro de publication: **0 088 833**

**A1**

## (12) DEMANDE DE BREVET EUROPEEN

(21) Numéro de dépôt: **82200331.5**

(22) Date de dépôt: **15.03.82**

(51) Int. Cl.³: **H 01 G 1/08**

(43) Date de publication de la demande:
**21.09.83** Bulletin **83/38**

(84) Etats contractants désignés:
**AT BE CH DE FR GB IT LI LU NL SE**

(71) Demandeur: **ASEA-JUMET, Société Anonyme**
**Siége Social Zone Industrielle Jumet-Gosselies**
**B-6040 Jumet(BE)**

(72) Inventeur: **Schmidt, Jacques**
**Rue de la Cascade, 29**
**B-6090 Couillet(BE)**

(74) Mandataire: **Bossard, Franz et al,**
**ACEC - Service des Brevets Boîte Postale 4**
**B-6000 Charleroi(BE)**

(54) **Condensateur multiple équipé de dispositifs de refroidissement.**

㉗ Condensateur de puissance constitúe de plusieurs rouleaux (1) de condensateur dont chacun est inséré dans un logement (2) formé par une feuille métallique (3) en contact thermique intime avec au moins une des parois (4) du boîtier.

Fig. 1

EP 0 088 833 A1

TITRE ~~~~~~
voir page de garde

## CONDENSATEUR DE PUISSANCE.

Il existe déjà des condensateurs de puissance constitués de plusieurs rouleaux de condensateur enfermés dans un boîtier métallique dans lesquels chaque rouleau de condensateur est en contact avec au moins une feuille métallique, conductrice de la chaleur, elle-même en contact avec au moins une des parois du boîtier.

Le but de l'invention est d'améliorer encore les conditions de transmission de chaleur vers la paroi du boîtier afin de rendre capable le condensateur de supporter des puissances plus élevées.

L'invention est caractérisée en ce que chaque rouleau de condensateur est inséré dans un logement formé par une feuille métallique en contact d'échange thermique intime avec au moins une des parois du boîtier.

L'invention est applicable aussi bien à des condensateurs dont les rouleaux sont enfermés dans des boîers individuels qu'à des condensateurs dont les rouleaux ne sont pas enfermés dans des boîtiers métalliques individuels. Elle est particulièrement utile dans le cas ou l'enceinte renfermant l'ensemble des rouleaux individuels n'est pas rempli d'une huile ou autre isolant liquide.

Des exemples de formes d'exécution de condensateur suivant l'invention sont décrits ci-dessous en se référant au dessin annexé.

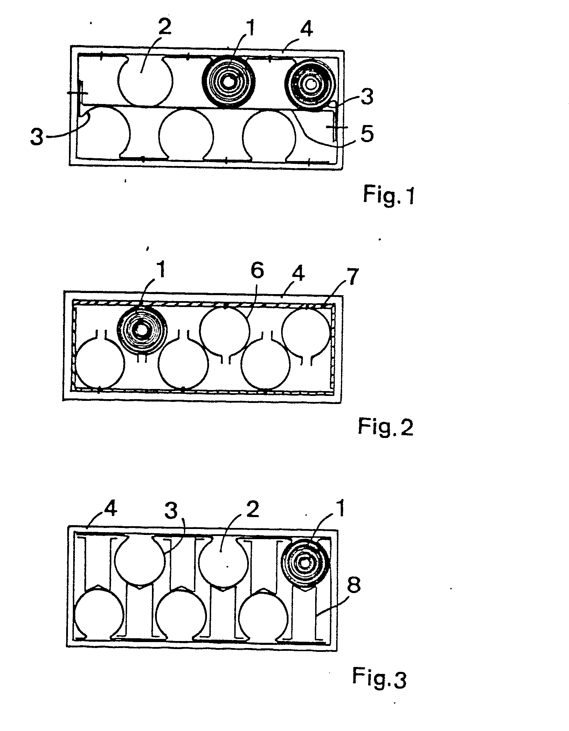

A la figure 1, un condensateur est constitué par des rouleaux individuels 1 insérés à serrage dans des logements 2 en U obtenus par des déformations d'une tôle 3. La tôle 3 est fixée à au moins une des parois 4 d'un boîtier métallique soit par soudure, soit par rivets, vis etc. La fixation peut être faite soit avant l'insertion des rouleaux 1, soit après l'insertion des rouleaux 1. Afin d'assurer un bon contact des tôles 3 avec les parois 4 du boîtier il est possible d'assurer le calage des logements contre les parois 4 au moyen de barres ou de tôles de calage 5 qui de préférence sont aussi mises en contact avec les parois 4 et contribuent ainsi à améliorer le refroidisssement des rouleaux de condensateur. Ces barres ou tôles peuvent remplacer la fixation des tôles 3 par soudure ou rivets sur les parois 4.

A la figure 2, un condensateur est constitué de rouleaux individuels 1 insérés dans des viroles élastiques 6 soudées chacune sur une paroi 4 d'un boîtier métallique. Chaque virole 6 entoure presque

68.11/1876.

complètement un rouleau 1 et le maintient sous serrage. En variante, les viroles 6 peuvent être soudées sur une tôle de base 7 appliquée à plat sur une paroi d'un boîtier métallique 4. Pour assurer le calage des tôles de base 7 contre les parois 4 du boîtier métallique, les viroles de part et d'autre du plan de symétrie du boîtier métallique peuvent être tangentes de sorte que le tout est mis à serrage à l'intérieur du boîtier.

A la figure 3 un condensateur semblable à celui de la figure 1 est constitué de rouleaux individuels 1 insérés dans des logements 2 en U obtenus par des déformations d'une tôle 3. Chaque tôle 3 est appliquée à force sur une paroi d'un boîtier métallique au moyen de plusieurs éléments de calage 8, par exemple en tôle. Les éléments de calage sont des tôles pliées en forme de M; ils peuvent remplacer la fixation par des points de soudure de la solution suivant la figure 1 ou simplement améliorer le contact thermique établi par les points de soudure. En outre de tels éléments de calage en métal contribuent à leur tour à l'évacuation des calories vers les parois 4 du boîtier métallique.

L'excellent contact thermique avec les parois 4 du boîtier est dû au fait que chaque rouleau est en contact prequ'immédiat avec une paroi 4 de sorte que le mchemin pour l'écoulement des calories vers les parois 4 du boîtier est particulièrement court et passe par un minimum de faces intermédiaires. Selon la figure 2, le chemin des calories dans les viroles est particulièrement court, mais la surface de contact à l'endroit de la fixation par des soudures par points est très petite. Par contre grâce aux soudures,le contact est excellent. Dans la solution selon la figure 1, le chemin pour évacuer les calories est un peu plus long que selon la figure 2, mais la surface de contact avec les parois 4 du boîtier est très grande.

L'espace entre les logements 2 ou viroles 6 peut être un espace d'air ou peut être rempli par une masse absorbante, meuble telle que la vermiculite.

Le contact intime entre les rouleaux de condensateur 1 et les tôles 3 n'exclut pas une fine couche d'isolant électrique entourant chaque rouleau et formant éventuellement boîtier individuel. Les tôles 3 peuvent être en n'importe quel métal, acier, aluminium, cuivre mais leur épaisseur peut être particulièrement faible si la conductibilité calorifique est élevée.

REVENDICATIONS.

1. Condensateurs de puissance constitués de plusieurs rouleaux (1) de condensateur enfermés dans un boîtier métallique, dans lequels chaque rouleau de condensateur (1) est en contact avec au moins une feuille métallique (3,6), conductrice de la chaleur en contact avec au moins une des parois (4) du boîtier,

caractérisés en ce que chaque rouleau de condensateur (1) est inséré dans un logement (2) formé par une feuille métallique (3) en contact thermique intime avec au moins une des parois (4) du boîtier.

2. Condensateurs suivant la revendication 1, caractérisés en ce que chaque feuille métallique (3) est fixée à la paroi (4) du boîtier.

3. Condensateurs suivant la revendication 1, caractérisés en ce que les feuilles métalliques sont des viroles élastiques fixées à des parois (4) du boîtier.

4. Condensateurs suivant la revendication 1, caractérisés en ce que les feuilles métalliques (3,6) conductrices de la chaleur sont en contact intime avec des tôles de base (7), elles-mêmes en contact intime avec des parois (4) du boîtier.

5. Condensateurs suivant une des revendications précédentes, caractérisés en ce que le contact intime avec les parois (4) du boîtier est assuré ou renforcé par des éléments de calage (5,8).

68.11/1876.

**0088833**

REVENDICATIONS
AMENDÉES

REVENDICATIONS

1. Condensateurs de puissance constitués de plusieurs rouleaux (1) de condensateur enfermés dans un boîtier métallique, dans lequel chaque rouleau de condensateur (1) est en contact avec au moins une feuille métallique (3,6), conductrice de la chaleur, en contact avec au moins une des parois (4) du boîtier,

caractérisés en ce que chaque rouleau de condensateur (1) est inséré dans un logement (2) formé par une feuille métallique (3) fixée en contact thermique intime à l'endroit de ce logement même ou de part et d'autre de ce logement à au moins une des parois (4) du boîtier.

2. Condensateurs suivant la revendication 1, caractérisés en ce que chaque feuille métallique (3) est fixée en plusieurs endroits à la paroi (4) du boîtier.

3. Condensateurs suivant la revendication 1, caractérisés en ce que les feuilles métalliques sont des viroles élastiques fixées à des parois (4) du boîtier.

4. Condensateurs suivant la revendication 1, caractérisés en ce que les feuilles métalliques (3,6) conductrices de la chaleur sont fixées en contact intime à des tôles de base (7), elles-mêmes en contact intime avec des parois (4) du boîtier.

5. Condensateurs suivant une des revendications précédentes, caractérisés en ce que la fixation en contact intime avec les parois (4) du boîtier est assurée ou renforcée par des éléments de calage (5,8)

68.11/1876

Fig. 1

Fig. 2

Fig. 3

Office européen
des brevets

**RAPPORT DE RECHERCHE EUROPEENNE**

**0088833**
Numéro de la demande

EP 82 20 0331

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | H 01 G 1/08 |
| X | EP-A-0 007 139 (ASEA JUMET) *Page 1, ligne 21 - page 2, ligne 36; figures* | 1-2 | |
| | --- | | |
| X | DE-C- 916 439 (BRUNO KIRSCHT et al.) *Page 2, lignes 51-60; figure 4* | 1-2 | |
| | --- | | |
| X | FR-A- 60 083 (SOCIETE GENERALE DE CONSTRUCTIONS ELECTRIQUES ET MECANIQUES ALSTHOM) *Résumé* | 1 | |
| | ----- | | |

**DOMAINES TECHNIQUES RECHERCHES (Int. Cl. ³)**

H 01 G
H 01 M

Le présent rapport de recherche a été établi pour toutes les revendications

| Lieu de la recherche | Date d'achèvement de la recherche | Examinateur |
|---|---|---|
| LA HAYE | 27-10-1982 | SCHUERMANS N.F.C. |